# EUROPEAN PATENT APPLICATION

(11) **EP 3 432 538 A1**
(43) Date of publication of application: **23.01.2019**
(21) Application number: 17181959.2
(22) Date of filing: 18.07.2017
(51) Int. Cl.: H04L 29/06, H04W 12/06, H04W 4/00

(54) **A COMMUNICATION DEVICE FOR PROVIDING A DATA PACKET TO BE AUTHENTICATED BY A FURTHER COMMUNICATION DEVICE**

(71) Applicant: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Patentship Patentanwaltsgesellschaft mbH

(57) **Abstract**

The invention relates to a communication device (100) for providing a data packet to be authenticated by a further communication device, wherein the communication device (100) and the further communication device are arranged within a communication network comprising an authentication center, and wherein the communication device (100) is not authenticated by the authentication center. The communication device (100) comprises a memory (101) configured to store a cryptographic authentication key, a processor (103) configured to generate a cryptographic authentication token based on the cryptographic authentication key, and to combine payload data with the cryptographic authentication token in order to obtain the data packet, and a communication interface (105) configured to transmit the data packet to the further communication device over the communication network.

## Description

### TECHNICAL FIELD

In general, the invention relates to the field of wireless communication networks. More specifically, the invention relates to communication devices, methods and communication systems based on Low-Power Wide-Area (LPWA) technology, in particular Narrowband IoT (NB IoT) technology.

### TECHNICAL BACKGROUND

Narrowband IoT (NB IoT) is a new technology standard, designed to broaden the future of IoT connectivity. Ratified by the 3GPP, NB IoT is starting to be deployed by mobile network operators across the globe. NB IoT is a Low-Power Wide-Area (LPWA) technology, developed to enable efficient communication for massively distributed communication devices across wide geographical areas and deep within urban infrastructure. NB IoT technology is ideal for communication devices that generate low data traffic, rely on batteries and typically have a long life cycle. A battery life of more than 10 years may be supported for a wide range of use cases.

Moreover, NB IoT technology significantly improves the system capacity and spectrum efficiency, especially in deep coverage. Thus, NB IoT technology can be used to connect simple communication devices, such as sensors, to drive new data streams, reduce operational costs and create new business models. Smart meters, smart bins, environmental monitoring and precision agriculture are just a few exemplary applications of NB IoT technology. Due to the limited hardware resources of communication devices based on LPWA technology and, in particular, NB IoT technology, security mechanisms known, for instance, from smartphones may typically not be used for such communication devices.

Thus, there is a need for improved communication devices, methods and communication systems based on LPWA technology, in particular NB IoT technology.

### SUMMARY

It is an object of the invention to provide improved communication devices, methods and communication systems for authenticated communication within a communication network, in particular communication networks based on LPWA and/or NB IoT technology.

The foregoing and other objects are achieved by the subject matter of the independent claims. Further implementation forms are apparent from the dependent claims, the description and the figures.

According to a first aspect, the invention relates to a communication device for providing a data packet to be authenticated by a further communication device, wherein the communication device and the further communication device are arranged within a communication network comprising an authentication center, and wherein the communication device is not authenticated by the authentication center. The communication device comprises a memory configured to store a cryptographic authentication key, a processor configured to generate a cryptographic authentication token based on the cryptographic authentication key, and to combine payload data with the cryptographic authentication token in order to obtain the data packet, and a communication interface configured to transmit the data packet to the further communication device over the communication network.

The communication device allows for an authentication of the data packet by the further communication device. The communication device may e.g. be out-of-range of the authentication center or a base station associated with the authentication center. The further communication device may e.g. be within the range of the authentication center or the base station associated with the authentication center.

In an implementation form, the communication device is configured to communicate with the further communication device based on a communication protocol stack, wherein the processor is configured to combine the payload data with the cryptographic authentication token at a data link layer of the communication protocol stack.

The data link layer corresponds to the second layer of the OSI communication protocol stack (OSI layer 2). The data link layer may e.g. comprise a logical link control (LLC) sublayer and/or a media access control (MAC) sublayer.

In an implementation form, the processor is configured to append the cryptographic authentication token to the payload data to combine the payload data with the cryptographic authentication token. In this case, the payload data and the cryptographic authentication token may be unchanged.

In an implementation form, the processor is configured to prepend the cryptographic authentication token to the payload data to combine the payload data with the cryptographic authentication token. In this case, the payload data and the cryptographic authentication token may be unchanged.

In an implementation form, the processor is configured to generate the cryptographic authentication token based on the cryptographic authentication key and the payload data. The cryptographic authentication token can thus be specifically linked to the payload data.

In an implementation form, the cryptographic authentication key is a symmetric cryptographic key, wherein the communication interface is configured to receive the cryptographic authentication key from the authentication center over the communication network, and to store the cryptographic authentication key in the memory. Thereby, a symmetric key approach can be realized. The same cryptographic authentication key may e.g. be distributed to a plurality of communication devices by the authentication center or by a base station associated with the authentication center.

In an implementation form, the processor is configured to generate the cryptographic authentication token based on the cryptographic authentication key using an HMAC algorithm. The HMAC (hash-based message authentication code) algorithm is standardized and may e.g. be implemented according to IETF RFC 2104.

In an implementation form, the processor is configured to generate an asymmetric cryptographic key pair comprising a private cryptographic key and a public cryptographic key, wherein the cryptographic authentication key is formed by the private cryptographic key. Thereby, an asymmetric key approach can be realized. The asymmetric cryptographic key pair is generated by the communication device.

In an implementation form, the communication interface is configured to transmit the public cryptographic key to the authentication center over the communication network. The public cryptographic key may e.g. be stored by the authentication center and may be transmitted by the authentication center to a plurality of communication devices within the communication network.

In an implementation form, the processor is configured to generate the cryptographic authentication token based on the cryptographic authentication key using a digital signature algorithm. The digital signature algorithm may be standardized and may be implemented according to established standards by NIST or ETSI.

In an implementation form, the communication device further comprises a security enclave configured to authenticate the communication device within the communication network, wherein the security enclave comprises the memory and the processor of the communication device. The security enclave can allow for a reliable and secure implementation of the memory and the processor of the communication device. The security enclave may hold or store network authentication credentials for registering and/or authenticating the communication device within the communication network. The security enclave may further be configured to identify the communication device within the communication network.

According to a second aspect, the invention relates to a communication device for authenticating a data packet provided by a further communication device, wherein the communication device and the further communication device are arranged within a communication network comprising an authentication center, and wherein the communication device is authenticated by the authentication center. The communication device comprises a communication interface configured to receive the data packet from the further communication device over the communication network, wherein the data packet comprises payload data and a cryptographic authentication token, a memory configured to store a cryptographic validation key, and a processor configured to extract the cryptographic authentication token from the data packet, and to validate the cryptographic authentication token based on the cryptographic validation key for authenticating the data packet. The communication device is used for authentication of the data packet. By authenticating the data packet, the communication device may verify that the data packet has been generated by the further communication device.

In an implementation form, the processor is configured to process the payload data if the data packet is authenticated. If the data packet is not authenticated, the processor can be configured to discard the data packet.

In an implementation form, the communication interface is configured to forward the data packet over the communication network if the data packet is authenticated. The data packet may be forwarded to the authentication center, an arbitrary further communication device or an arbitrary server entity within the communication network.

In an implementation form, the processor is configured to validate the cryptographic authentication token based on the cryptographic validation key and the payload data. The cryptographic authentication token can be specifically linked to the payload data and the processor can additionally use the payload data for authenticating the data packet.

In an implementation form, the cryptographic validation key is a symmetric cryptographic key, wherein the communication interface is configured to receive the cryptographic validation key from the authentication center over the communication network, and to store the cryptographic validation key in the memory. Thereby, a symmetric key approach can be realized. A plurality of communication devices within the communication network can receive the same cryptographic validation key from the authentication center.

In an implementation form, the communication interface is configured to receive a client certificate comprising a public cryptographic key from the authentication center over the communication network, wherein the cryptographic validation key is formed by the public cryptographic key, and wherein the communication interface is configured to store the cryptographic validation key in the memory. Thereby, an asymmetric key approach can be realized. The authentication center can be configured to generate the client certificate comprising the public cryptographic key. The client certificate is associated with the further communication device.

In an implementation form, the memory is configured to store a root certificate associated with the authentication center, and wherein the processor is configured to validate the client certificate based on the root certificate. The root certificate may be stored in the memory during initialization or personalization of the communication device.

In an implementation form, the communication device further comprises a security enclave configured to authenticate the communication device within the communication network, wherein the security enclave comprises the memory and the processor of the communication device. The security enclave can allow for a reliable and secure implementation of the memory and the processor of the communication device. The security enclave may hold or store network authentication credentials for registering and/or authenticating the communication device within the communication network. The security enclave may further be configured to identify the communication device within the communication network.

According to a third aspect, the invention relates to a communication system for communicating over a communication network. The communication system comprises a communication device according to the first aspect of the invention, a further communication device according to the second aspect of the invention, and an authentication center configured to authenticate the further communication device within the communication network. The communication device and the further communication device may communicate with each other over the communication network.

In an implementation form, the communication system further comprises a base station configured to establish a communication link between the communication device and the authentication center, and/or to establish a further communication link between the further communication device and the authentication center. The base station may be associated with the authentication center. The base station can allow for wireless communication links to the communication device and the further communication device, respectively.

According to a fourth aspect, the invention relates to a method for providing a data packet by a communication device, wherein the data packet is to be authenticated by a further communication device. The communication device and the further communication device are arranged within a communication network comprising an authentication center (AuC), wherein the communication device is not authenticated by the authentication center (AuC). The communication device comprises a memory, a processor, and a communication interface, wherein the memory is configured to store a cryptographic authentication key. The method comprises generating, by the processor, a cryptographic authentication token based on the cryptographic authentication key, combining, by the processor, payload data with the cryptographic authentication token in order to obtain the data packet, and transmitting, by the communication interface, the data packet to the further communication device over the communication network.

The method can be performed by the communication device according to the first aspect of the invention. Further features of the method directly result from the features or the functionality of the communication device.

According to a fifth aspect, the invention relates to a method for authenticating a data packet by a communication device, wherein the data packet is provided by a further communication device. The communication device and the further communication device are arranged within a communication network comprising an authentication center, wherein the communication device is authenticated by the authentication center. The communication device comprises a communication interface, a memory, and a processor, wherein the memory is configured to store a cryptographic validation key. The method comprises receiving, by the communication interface, the data packet from the further communication device over the communication network, wherein the data packet comprises payload data and a cryptographic authentication token, extracting, by the processor, the cryptographic authentication token from the data packet, and validating, by the processor, the cryptographic authentication token based on the cryptographic validation key for authenticating the data packet.

The method can be performed by the communication device according to the second aspect of the invention. Further features of the method directly result from the features or the functionality of the communication device.

According to a sixth aspect, the invention relates to a computer program for performing the method according to the fourth aspect of the invention or for performing the method according to the fifth aspect of the invention when executed on a communication device.

The invention can be implemented in hardware and/or software.

### BRIEF DESCRIPTION OF THE FIGURES

Implementation forms of the invention will be described with respect to the following figures, in which:
Fig. 1 shows a schematic diagram of a communication device for providing a data packet to be authenticated by a further communication device;
Fig. 2 shows a schematic diagram of a communication device for authenticating a data packet provided by a further communication device;
Fig. 3 shows a schematic diagram of a communication system for communicating over a communication network;
Fig. 4 shows a schematic diagram of a method for providing a data packet by a communication device;
Fig. 5 shows a schematic diagram of a method for authenticating a data packet by a communication device;
Fig. 6 shows a schematic diagram of a communication system for communicating over a communication network;
Fig. 7 shows a schematic diagram of a communication system for communicating over a communication network;
Fig. 8 shows a schematic diagram of a communication system for communicating over a communication network; and
Fig. 9 shows a schematic diagram of a communication system for communicating over a communication network.

### DETAILED DESCRIPTION OF THE FIGURES

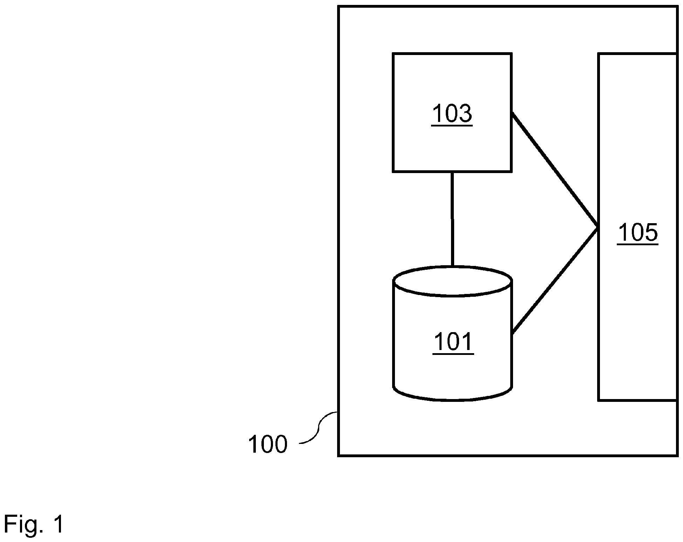

Fig. 1 shows a schematic diagram of a communication device 100 for providing a data packet to be authenticated by a further communication device, wherein the communication device 100 and the further communication device are arranged within a communication network comprising an authentication center, and wherein the communication device 100 is not authenticated by the authentication center. The communication device 100 comprises a memory 101 configured to store a cryptographic authentication key, a processor 103 configured to generate a cryptographic authentication token based on the cryptographic authentication key, and to combine payload data with the cryptographic authentication token in order to obtain the data packet, and a communication interface 105 configured to transmit the data packet to the further communication device over the communication network.

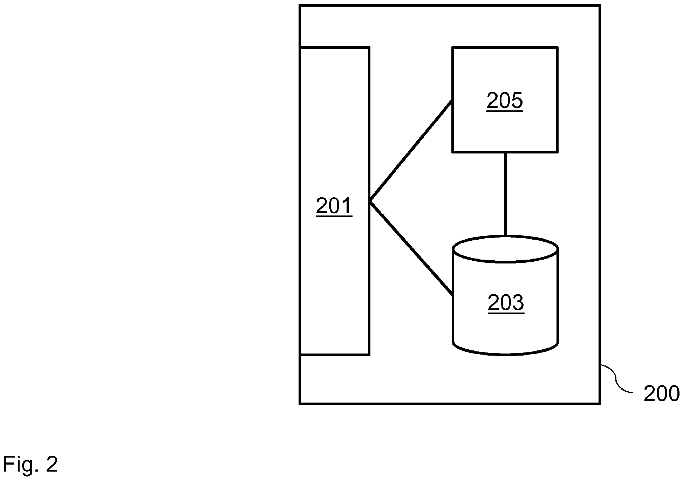

Fig. 2 shows a schematic diagram of a communication device 200 for authenticating a data packet provided by a further communication device, wherein the communication device 200 and the further communication device are arranged within a communication network comprising an authentication center, and wherein the communication device 200 is authenticated by the authentication center. The communication device 200 comprises a communication interface 201 configured to receive the data packet from the further communication device over the communication network, wherein the data packet comprises payload data and a cryptographic authentication token, a memory 203 configured to store a cryptographic validation key, and a processor 205 configured to extract the cryptographic authentication token from the data packet, and to validate the cryptographic authentication token based on the cryptographic validation key for authenticating the data packet.

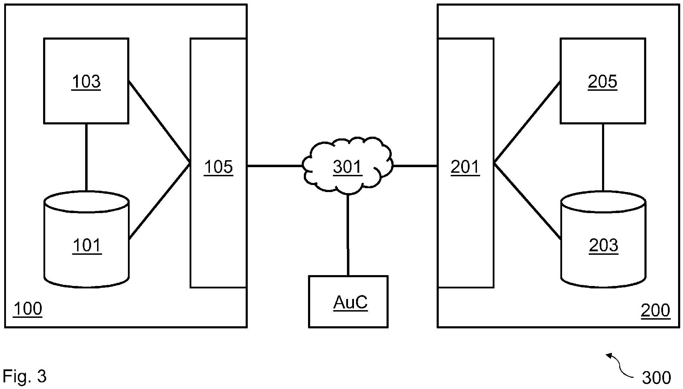

Fig. 3 shows a schematic diagram of a communication system 300 for communicating over a communication network 301. The communication system 300 comprises a communication device 100, a further communication device 200, and an authentication center AuC configured to authenticate the further communication 200 device within the communication network 301. The communication device 100 and the further communication device 200 may communicate with each other over the communication network 301.

The communication device 100 is configured to provide a data packet to be authenticated by the further communication device 200. The communication device 100 comprises a memory 101 configured to store a cryptographic authentication key, a processor 103 configured to generate a cryptographic authentication token based on the cryptographic authentication key, and to combine payload data with the cryptographic authentication token in order to obtain the data packet, and a communication interface 105 configured to transmit the data packet to the further communication device 200 over the communication network 301.

The further communication device 200 is configured to authenticate the data packet provided by the communication device 100. The further communication device 200 comprises a communication interface 201 configured to receive the data packet from the communication device 100 over the communication network 301, wherein the data packet comprises the payload data and the cryptographic authentication token, a memory 203 configured to store a cryptographic validation key, and a processor 205 configured to extract the cryptographic authentication token from the data packet, and to validate the cryptographic authentication token based on the cryptographic validation key for authenticating the data packet.

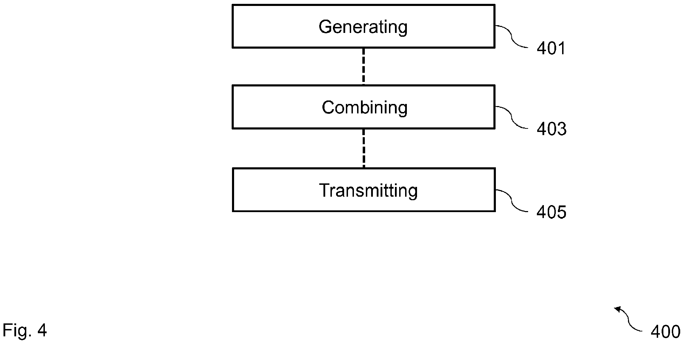

Fig. 4 shows a schematic diagram of a method 400 for providing a data packet by a communication device, wherein the data packet is to be authenticated by a further communication device. The communication device and the further communication device are arranged within a communication network comprising an authentication center (AuC), wherein the communication device is not authenticated by the authentication center (AuC). The communication device comprises a memory, a processor, and a communication interface, wherein the memory is configured to store a cryptographic authentication key. The method 400 comprises generating 401, by the processor, a cryptographic authentication token based on the cryptographic authentication key, combining 403, by the processor, payload data with the cryptographic authentication token in order to obtain the data packet, and transmitting 405, by the communication interface, the data packet to the further communication device over the communication network.

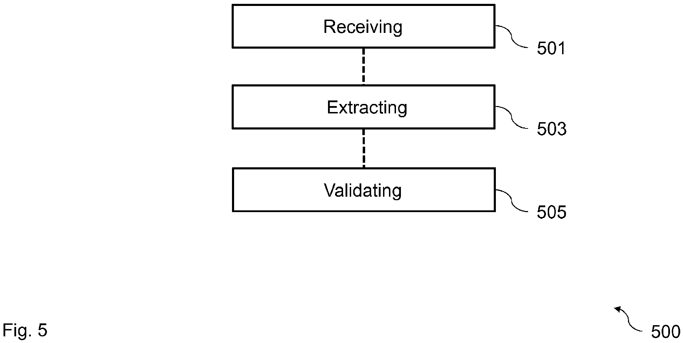

Fig. 5 shows a schematic diagram of a method 500 for authenticating a data packet by a communication device, wherein the data packet is provided by a further communication device. The communication device and the further communication device are arranged within a communication network comprising an authentication center, wherein the communication device is authenticated by the authentication center. The communication device comprises a communication interface, a memory, and a processor, wherein the memory is configured to store a cryptographic validation key. The method 500 comprises receiving 501, by the communication interface, the data packet from the further communication device over the communication network, wherein the data packet comprises payload data and a cryptographic authentication token, extracting 503, by the processor, the cryptographic authentication token from the data packet, and validating 505, by the processor, the cryptographic authentication token based on the cryptographic validation key for authenticating the data packet.

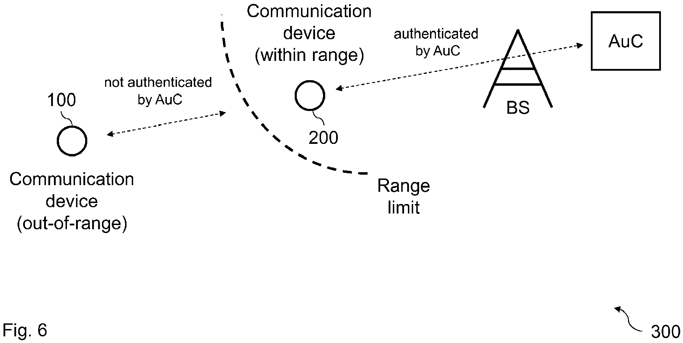

Fig. 6 shows a schematic diagram of a communication system 300 for communicating over a communication network. The communication system 300 comprises a communication device 100, a further communication device 200, an authentication center AuC configured to authenticate the further communication 200 device within the communication network, and a base station BS for wirelessly communicating with the further communication device 200. The communication network is a multi-hop mesh communication network, in particular using LPWA technology and/or NB IoT technology.

The authentication of the communication devices 100, 200 within the communication network is usually performed between each communication device 100, 200 and the authentication center AuC arranged within a core network of a mobile network operator using the millenage algorithm or the TUAK algorithm. An authenticated communication between the two communication devices 100 and 200 is usually not possible. This kind of authentication is, however, desired, if the communication device 100 is not within the range of the base station BS associated with the authentication center AuC, and if the communication device 100 intends to forward a generated data packet to the further communication device 200, which is possibly within the range of the base station BS. Otherwise, the forwarding of the data packet without prior authentication within the communication network may be misused in order to attack the infrastructure and to inject arbitrary data into the infrastructure. Currently, there are no standardized approaches for 2G / 3G / 4G / LPWA / NB IoT communication networks allowing for a mutual authentication of communication devices.

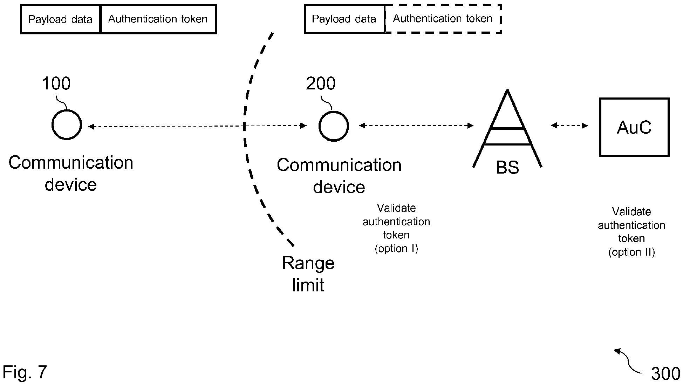

Fig. 7 shows a schematic diagram of a communication system 300 for communicating over a communication network. The communication system 300 comprises a communication device 100, a further communication device 200, an authentication center AuC configured to authenticate the further communication 200 device within the communication network, and a base station BS for wirelessly communicating with the further communication device 200. The communication network is a multi-hop mesh communication network, in particular using LPWA technology and/or NB IoT technology. The communication device 100 transmits a data packet comprising payload data and a cryptographic authentication token to the further communication device 200. The cryptographic authentication token may be validated by the further communication device 200 (option I) or by the authentication center AuC (option II).

The cryptographic authentication token is generated by the communication device 100 which authorizes the data packet for further transmission. The cryptographic authentication token may be generated once, e.g. during prior authentication of the communication device 100 within the communication network. Alternatively, the cryptographic authentication token may be generated by the communication device 100 for each data packet to be transmitted and may be validated by the further communication device 200.

The further communication device 200 may communicate with the base station BS and may forward the data packet to the base station BS after successful validation. The further communication device 200 may have the required authorization therefor and may have been authenticated by the authentication center AuC within the core network, e.g. using the millenage algorithm or the TUAK algorithm. This way, it can be prevented that unauthenticated communication devices inject arbitrary data into the core network, e.g. for initiating a denial-of-service (DoS) attack within the infrastructure.

For the authentication of the data packet by the further communication device 200, different key management schemes may be applied. The authentication of the data packet may e.g. be based on a symmetric key approach or on an asymmetric key approach. In this regard, the granting of rights to forward the data packet within the communication network is relevant.

In case of the symmetric key approach, it may be assumed that the right to forward the data packet may only be provided to communication devices that are associated with a common base station BS. Therefore, the communication device 100 may transmit the data packet to the base station BS using the further communication device 200 within range. The containment of the usage of the same symmetric cryptographic key used by the communication devices 100 and 200 being associated with the same base station BS may be used as a counter measure in order to prevent a scaling effect of an attack onto the symmetric cryptographic key beyond the area served by the base station BS. In case of the asymmetric key approach, this counter measure may not be relevant since individual cryptographic keys may be used for each communication device 100 and 200. In case of a compromised private cryptographic key, this key may be marked within the public-key-infrastructure (PKI) as invalid.

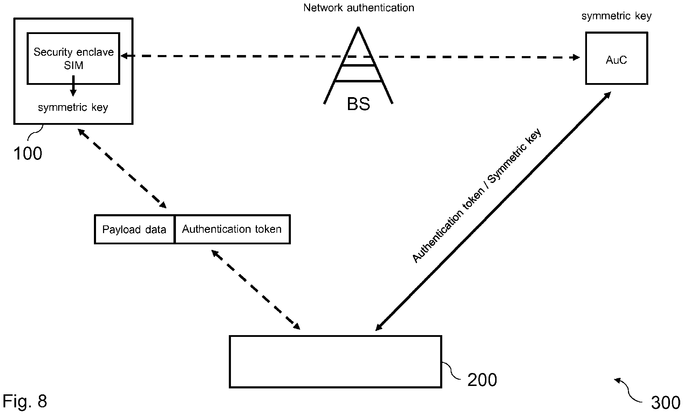

Fig. 8 shows a schematic diagram of a communication system 300 for communicating over a communication network. The communication system 300 comprises a communication device 100, a further communication device 200, an authentication center AuC configured to authenticate the further communication 200 device within the communication network, and a base station BS for wirelessly communicating with the communication device 100 and/or the further communication device 200. The communication network is a multi-hop mesh communication network, in particular using LPWA technology and/or NB IoT technology. The communication device 100 transmits a data packet comprising payload data and a cryptographic authentication token to the further communication device 200. The cryptographic authentication token may be validated by the further communication device 200 (option I) or by the authentication center AuC (option II). The authentication of the data packet is based on a symmetric key approach.

After authentication of the communication devices 100 and 200 using the millenage algorithm or the TUAK algorithm by the authentication center AuC via the base station BS, the authentication center AuC or the base station BS transmits an additional symmetric cryptographic key Ksym to all communication devices 100, 200 within range, which can be used for the authentication of data packets.

This symmetric cryptographic key Ksym may be identical for all communication devices 100, 200 and may securely be stored in a memory of a security enclave, e.g. a subscriber identity module (SIM), of the respective communication device 100, 200. The transmission of the bytes of the symmetric cryptographic key Ksym from the authentication center AuC or the base station BS to the respective communication device 100, 200 may be protected according to standardized or established approaches using a transport key.

If the communication link between the communication device 100 and the authentication center AuC or the base station BS is lost, a data packet to be transmitted by the communication device 100 can be transmitted to the further communication device 200 within range. The further communication device 200 may authenticate the data packet with the payload data using the cryptographic authentication token.

The cryptographic authentication token may e.g. be generated using the symmetric cryptographic key Ksym using an HMAC algorithm. The data packet may e.g. be structured as follows:
PAYLOAD DATA II HMAC-TOKEN (generated using Ksym)

The validation of the authentication token may be performed by the further communication device 200 using the symmetric cryptographic key Ksym, which may be identical for all communication devices 100, 200 associated with the base station BS.

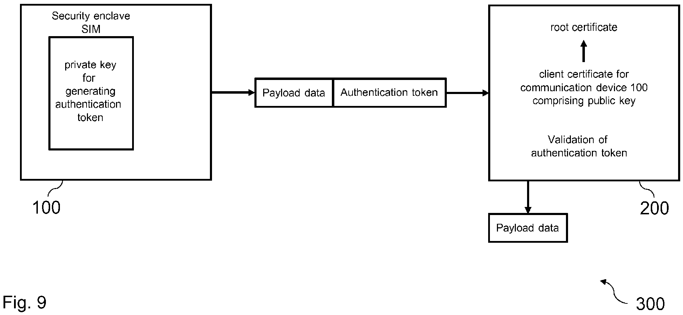

Fig. 9 shows a schematic diagram of a communication system 300 for communicating over a communication network. The communication system 300 comprises a communication device 100, a further communication device 200, an authentication center AuC (not shown), and a base station BS (not shown). The communication network is a multi-hop mesh communication network, in particular using LPWA technology and/or NB IoT technology. The communication device 100 transmits a data packet comprising payload data and a cryptographic authentication token to the further communication device 200. The authentication of the data packet is based on an asymmetric key approach using a public-key-infrastructure (PKI).

An asymmetric cryptographic key pair comprising a public cryptographic key Kpub and a private cryptographic key Kpriv is generated by the processor of the security enclave, e.g. the subscriber identity module (SIM), of the communication device 100. The public cryptographic key Kpub may e.g. be registered within a public-key-infrastructure of the mobile network operator, e.g. within the authentication center. A registration of the public cryptographic key Kpub may e.g. be performed after the authentication of the communication device 100 using the millenage algorithm or the TUAK algorithm. For validation purposes, a client certificate ClientCert may be generated for the communication device 100 within the core network, e.g. by the authentication center. This client certificate ClientCert may be linked to a root certificate RootCert of the mobile network operator or the authentication center. The root certificate RootCert may be stored in the memory of the security enclave, e.g. the subscriber identity module (SIM), of any communication device 100, 200 together with a network authentication key during personalization of the respective communication devices.

Due to the more flexible key management and typically increased security using an individual cryptographic key for each communication device 100, 200, the PKI-based approach, e.g. using an ECC algorithm may be preferred.

The cryptographic authentication token may e.g. be generated by providing a signature using the private cryptographic key Kpriv. The data packet may e.g. be structured as follows:
PAYLOAD DATA II SIGNATURE-TOKEN (generated using Kpriv) I ClientCert

The validation may be performed by the further communication device 200 using the public cryptographic key Kpub comprised by the client certificate ClientCert. The authorization of the public cryptographic key Kpub may be validated using the root certificate RootCert of the mobile network operator using standardized or established approaches.

### REFERENCE SIGNS

- 100: Communication device
- 101: Memory
- 103: Processor
- 105: Communication interface

- 200: Communication device
- 201: Communication interface
- 203: Memory
- 205: Processor

- 300: Communication system
- 301: Communication network

- 400: Method
- 401: Generating
- 403: Combining
- 405: Transmitting

- 500: Method
- 501: Receiving
- 503: Extracting
- 505: Validating

- AuC: Authentication center
- BS: Base station

- Ksym: Symmetric cryptographic key
- Kpriv: Private cryptographic key
- Kpub: Public cryptographic key

## Claims

1. A communication device (100) for providing a data packet to be authenticated by a further communication device (200), wherein the communication device (100) and the further communication device (200) are arranged within a communication network (301) comprising an authentication center (AuC), and wherein the communication device (100) is not authenticated by the authentication center (AuC), the communication device (100) comprising:
a memory (101) configured to store a cryptographic authentication key;
a processor (103) configured to generate a cryptographic authentication token based on the cryptographic authentication key, and to combine payload data with the cryptographic authentication token in order to obtain the data packet; and
a communication interface (105) configured to transmit the data packet to the further communication device (200) over the communication network (301).

2. The communication device (100) of claim 1, wherein the communication device (100) is configured to communicate with the further communication (200) device based on a communication protocol stack, and wherein the processor (103) is configured to combine the payload data with the cryptographic authentication token at a data link layer of the communication protocol stack.

3. The communication device (100) of any one of the claims 1 or 2, wherein the cryptographic authentication key is a symmetric cryptographic key (Ksym), and wherein the communication interface (105) is configured to receive the cryptographic authentication key from the authentication center (AuC) over the communication network (301), and to store the cryptographic authentication key in the memory (101).

4. The communication device (100) of claim 3, wherein the processor (103) is configured to generate the cryptographic authentication token based on the cryptographic authentication key using an HMAC algorithm.

5. The communication device (100) of any one of the claims 1 or 2, wherein the processor (103) is configured to generate an asymmetric cryptographic key pair comprising a private cryptographic key (Kpriv) and a public cryptographic key (Kpub), wherein the cryptographic authentication key is formed by the private cryptographic key (Kpriv).

6. The communication device (100) of claim 5, wherein the communication interface (105) is configured to transmit the public cryptographic key (Kpub) to the authentication center (AuC) over the communication network (301).

7. The communication device (100) of any one of the claims 5 or 6, wherein the processor (103) is configured to generate the cryptographic authentication token based on the cryptographic authentication key using a digital signature algorithm.

8. A communication device (200) for authenticating a data packet provided by a further communication device (100), wherein the communication device (200) and the further communication device (100) are arranged within a communication network (301) comprising an authentication center (AuC), and wherein the communication device (200) is authenticated by the authentication center (AuC), the communication device (200) comprising:
a communication interface (201) configured to receive the data packet from the further communication device (100) over the communication network (301), wherein the data packet comprises payload data and a cryptographic authentication token;
a memory (203) configured to store a cryptographic validation key; and
a processor (205) configured to extract the cryptographic authentication token from the data packet, and to validate the cryptographic authentication token based on the cryptographic validation key for authenticating the data packet.

9. The communication device (200) of claim 8, wherein the processor (205) is configured to process the payload data if the data packet is authenticated, or wherein the communication interface (201) is configured to forward the data packet over the communication network (301) if the data packet is authenticated.

10. The communication device (200) of any one of the claims 8 or 9, wherein the cryptographic validation key is a symmetric cryptographic key (Ksym), wherein the communication interface (201) is configured to receive the cryptographic validation key from the authentication center (AuC) over the communication network (301), and to store the cryptographic validation key in the memory (203).

11. The communication device (200) of any one of the claims 8 or 9, wherein the communication interface (201) is configured to receive a client certificate comprising a public cryptographic key (Kpub) from the authentication center (AuC) over the communication network (301), wherein the cryptographic validation key is formed by the public cryptographic key (Kpub), and wherein the communication interface (201) is configured to store the cryptographic validation key in the memory (203).

12. A communication system (300) for communicating over a communication network (301), the communication system (300) comprising:
a communication device (100) of any one of the claims 1 to 7;
a further communication device (200) of any one of the claims 8 to 11; and
an authentication center (AuC) configured to authenticate the further communication device (200) within the communication network (301).

13. A method (400) for providing a data packet by a communication device (100), wherein the data packet is to be authenticated by a further communication device (200), wherein the communication device (100) and the further communication device (200) are arranged within a communication network (301) comprising an authentication center (AuC), and wherein the communication device (100) is not authenticated by the authentication center (AuC), wherein the communication device (100) comprises a memory (101), a processor (103), and a communication interface (105), wherein the memory (101) is configured to store a cryptographic authentication key, the method (400) comprising:
generating (401), by the processor (103), a cryptographic authentication token based on the cryptographic authentication key;
combining (403), by the processor (103), payload data with the cryptographic authentication token in order to obtain the data packet; and
transmitting (405), by the communication interface (105), the data packet to the further communication device (200) over the communication network (301).

14. A method (500) for authenticating a data packet by a communication device (200), wherein the data packet is provided by a further communication device (100), wherein the communication device (200) and the further communication device (100) are arranged within a communication network (301) comprising an authentication center (AuC), and wherein the communication device (200) is authenticated by the authentication center (AuC), wherein the communication device (200) comprises a communication interface (201), a memory (203), and a processor (205), wherein the memory (203) is configured to store a cryptographic validation key, the method (500) comprising:
receiving (501), by the communication interface (201), the data packet from the further communication device (100) over the communication network (301), wherein the data packet comprises payload data and a cryptographic authentication token;
extracting (503), by the processor (205), the cryptographic authentication token from the data packet; and
validating (505), by the processor (205), the cryptographic authentication token based on the cryptographic validation key for authenticating the data packet.

15. A computer program for performing the method (400) of claim 13 or for performing the method (500) of claim 14 when executed on a communication device (100; 200).
